# FASCICULE DE BREVET EUROPEEN

(11) **EP 1 882 551 B1**
(45) Date de publication et mention de la délivrance du brevet: **12.01.2011**
(21) Numéro de dépôt: 07290946.8
(22) Date de dépôt: 26.07.2007
(51) Int. Cl.: B24C 3/18, B24C 7/00, B24C 9/00, B24C 11/00

(54) **Procédé physique de dépolissage**
Physikalisches Mattierungsverfahren
Physical method of delustring

(30) Priorité: 27.07.2006 FR 0606903
(43) Date de publication de la demande: 30.01.2008
(73) Titulaire: Lifco Industrie, 76750 Buchy (FR)
(72) Inventeur: Iacob, Constantin, 76690 St. Georges sur Fontaine (FR); Bucher, Sébastien, 76660 Clais (FR)
(74) Mandataire: Pichat, Thierry

(56) Documents cités:
- EP-A- 1 304 189
- DE-B1- 1 508 988
- US-A1- 3 093 418
- US-A1- 5 201 150
- US-A1- 5 239 788
- US-A1- 6 074 135
- US-A1- 2001 007 808

## Description

La présente invention concerne, de façon générale, le domaine du traitement de surface, et plus particulièrement le domaine du dépolissage.

Dans ce domaine, on connaît la technologie du dépolissage chimique. Cette méthode connue consiste à mettre en contact la surface d'un article avec un bain d'acide fluorhydrique. L'utilisation d'un tel produit chimique est préjudiciable pour l'environnement.

Plus précisément, l'invention concerne un procédé physique de traitement de surface d'articles selon le préambule de la revendication 1.

Un tel procédé est connu de l'homme du métier, notamment par l'exemple qu'en donne le document RU 2 160 721 ou le document US 5 201 150.

Ce premier document concerne un procédé pour obtenir une surface mate sur un article en verre. Le procédé consiste à soumettre la surface d'un article en verre à un flux de particules abrasives en lit fluidisé. Les particules sont des granules d'oxyde métallique. La vitesse du flux est de 1,5 à 4 mètres par seconde et la température de l'agent de fluidisation est comprise entre 150 et 450 °C.

Le procédé décrit présente l'inconvénient d'utiliser des particules de taille importante et de chauffer l'agent de fluidisation qui est un gaz, ce qui implique une importante consommation d'énergie électrique. La température élevée permet d'atténuer grossièrement les rugosités.

En outre, la surface mate obtenue par ce procédé n'a pas le même aspect qu'une surface dépolie en bain chimique.

Dans ce contexte, la présente invention a pour but de proposer un procédé exempt de l'une au moins des limitations précédemment évoquées, et plus particulièrement de proposer un procédé non polluant permettant un dépolissage uniforme et homogène sur l'ensemble de la surface traitée.

A cette fin, le procédé de l'invention, par ailleurs conforme à la définition générique qu'en donne le préambule ci-dessus, est caractérisé par la partie caractérisante de la revendication 1.

Le premier fluide est un gaz tel que l'air.

L'invention présente l'avantage de permettre l'obtention d'un état de surface et d'un toucher de qualité comparable voire meilleure qu'un dépolissage chimique, pour un coût au plus équivalent. Les défauts observés après dépolissage chimique du type crevasse ou corde sont complètement évités.

L'invention permet en outre une plus large gamme de touchers en ce que l'état de surface est maîtrisé en fonction des particules choisies.

Le procédé de l'invention présente en outre l'avantage d'être non polluant et de permettre un polissage partiel ou de retirer des masques par exemple de type oxydes réfractaires.

L'opération de fluidisation a lieu en présence d'un deuxième fluide qui est un liquide tel que l'eau.

De préférence, la température est comprise entre 15 et 30°C, et est de préférence égale à la température ambiante.

Les particules fluidisées sont de manière avantageuse récupérées pendant l'opération de traitement et/ou pendant une opération de lavage post-traitement, et recyclées au niveau de l'opération de fluidisation.

Le recyclage offre l'avantage de limiter la consommation de particules et d'eau.

Avantageusement, les particules sont des particules composites incluant un noyau et un revêtement de carbure de silicium ou de carbure de tungstène ou de nitrure de bore.

Le noyau comprend préférentiellement un matériau ferromagnétique, et par exemple du fer et/ou au moins un oxyde de fer.

L'invention concerne plus particulièrement un procédé dans lequel chaque article est en un matériau choisi parmi le verre, un métal ou un alliage.

Selon une version avantageuse, la pression du flux de particules pour l'opération de traitement est comprise entre 2 et 15 bars, et de préférence comprise entre 8 et 12 bars.

La quantité de particules fluidisées est de préférence comprise entre 10% et 60% du poids de deuxième fluide, tout préférentiellement entre 15% et 50%.

D'après un mode de réalisation avantageux, les particules récupérées sont soumises à une opération de séparation afin de recycler au niveau de l'opération de fluidisation les particules exemptes d'éventuels résidus de l'article traité.

L'invention offre donc l'avantage de proposer un procédé automatisable et de grande capacité pour le dépolissage d'articles.

D'autres caractéristiques et avantages de l'invention ressortiront clairement de la description détaillée qui en est faite ci-après, à titre indicatif et nullement limitatif, en référence aux dessins annexés dans lesquels :
- la figure 1 représente un schéma d'une installation qui ne représente pas un mode de réalisation de l'invention ; et
- la figure 2 représente un schéma d'une installation selon un mode de réalisation de l'invention.
Les éléments d'installation communs aux figures 1 et 2 portent les mêmes références numériques.

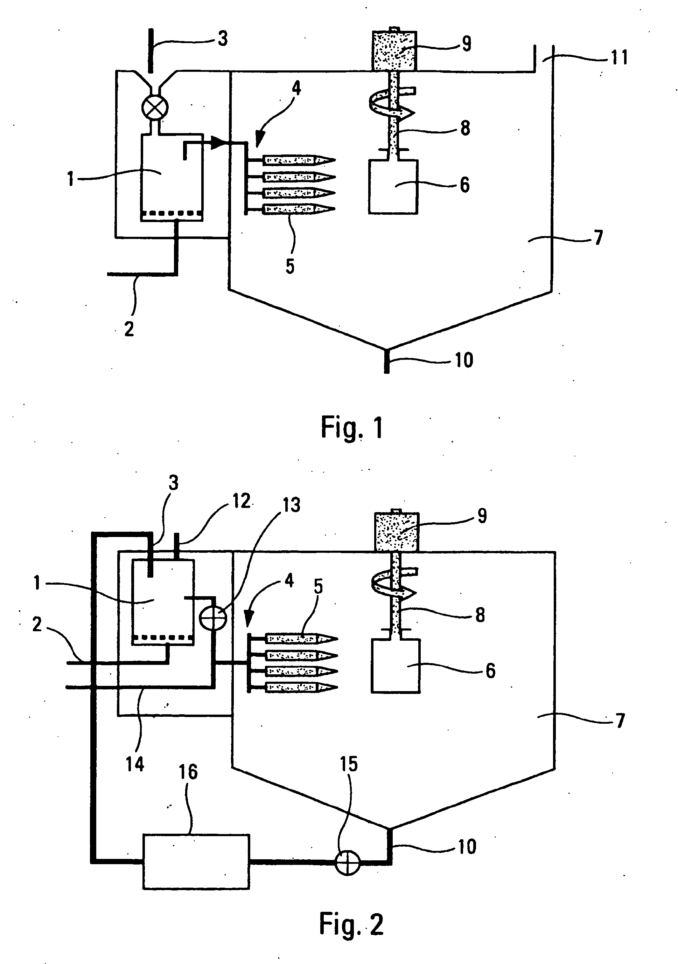

Dans la figure 1, une chambre 1 de fluidisation est alimentée par une arrivée 2 d'un premier fluide et une arrivée 3 de particules.

Ainsi, les particules sont fluidisées dans ce premier fluide qui est un gaz, selon une technique de lit fluidisé biphasé. Par exemple, le premier fluide est du gaz comprimé, et plus particulièrement de l'air comprimé.

La technique de lit fluidisé permet d'assurer une répartition homogène des particules dans le premier fluide.

Les particules fluidisées passent de la chambre 1 de fluidisation à un dispositif 4 de projection. Ce dispositif 4 inclut au moins un moyen 5 de projection.

Ce moyen 5 de projection est par exemple une buse de projection. Il présente une section transversale, par exemple circulaire ou rectangulaire, de surface comprise entre 5 et 20 millimètres carré. De préférence, cette surface est comprise entre 8 et 15 millimètres carré.

On choisit le nombre de moyens 5 de projection en fonction des dimensions du ou des articles 6 qui sont traités par le procédé selon l'invention.

Chaque article 6 peut être en un matériau choisi parmi le verre, un métal ou un alliage. La mise en oeuvre de l'invention est particulièrement avantageuse pour le dépolissage d'articles en verre.

La disposition des moyens 5 de projection les uns par rapport aux autres est également déterminée en fonction de l'article 6, en particulier de sa forme.

On peut prévoir, pour prévenir l'usure des moyens 5 de projection, des pièces d'usure, en céramique technique par exemple.

Les particules sont donc projetées à la surface d'un article 6 à traiter sous la forme d'un lit fluidisé sous pression.

La pression du flux de particules est comprise entre 2 et 15 bars, et de préférence entre 8 et 12 bars.

Chaque article 6 est convoyé dans une enceinte 7 de traitement par un dispositif de convoyage tel qu'un convoyeur inversé.

Chaque article 6 peut être convoyé par exemple à une vitesse réglable entre 0 et 8 mètres par minute, de préférence entre 0 et 5 mètres par minute.

Chaque article 6 peut être tenu dans l'enceinte de traitement par un moyen adapté. Ce moyen est par exemple une tige 8.

Ce moyen peut être relié à un moteur 9 qui entraîne la rotation de l'article tenu par ce moyen. Ainsi, chaque article peut être mis en rotation autour d'un axe

La surface de chaque article 6 est placée de manière avantageuse à une distance du dispositif 4 de projection du flux de particules, plus particulièrement d'une extrémité de ce dispositif 4 représentée par l'extrémité au niveau de laquelle le flux est projeté, comprise entre 3 et 20 centimètres. De préférence, cette distance est comprise entre 5 et 15 centimètres.

Au moins une évacuation 10, 11 de l'enceinte de traitement peut être prévue pour permettre la sortie des particules fluidisées et des résidus du dépolissage. Une évacuation 11 peut être équipée par exemple d'un cyclone.

Dans la figure 2, une arrivée 12 d'un deuxième fluide dans la chambre 1 de fluidisation est présente. Les particules sont fluidisées selon une technique de lit fluidisé triphasé.

La technique de lit fluidisé permet d'assurer une homogénéité parfaite du mélange des particules dans le deuxième fluide.

Le deuxième fluide est un liquide.

Dans ce mode de réalisation de l'installation selon l'invention, les particules qui alimentent la chambre 1 de fluidisation sont fluidisées dans un premier fluide et un deuxième fluide, qui sont respectivement un gaz et un liquide.

Ce gaz et ce liquide peuvent respectivement être un mélange de gaz et un mélange de liquides.

Le dispositif 4 de projection peut inclure une pompe 13 permettant d'amener, avec une pression réglable, les particules fluidisées dans les premier et deuxième fluides jusque chaque moyen 5 de projection.

Du gaz sous pression est préférentiellement amené, par une voie 14, au niveau du dispositif 4 de projection en amont des moyens 5 de projection.

L'installation représentée à la figure 2 inclut des moyens de récupération et recyclage des particules fluidisées en aval de l'enceinte 7 de traitement et en amont de la chambre 1 de fluidisation.

Un de ces moyens peut être une pompe 15.

Les particules fluidisées sont récupérées pendant l'opération de traitement et/ou pendant une opération de lavage post-traitement, et recyclées au niveau de l'opération de fluidisation.

La matière récupérée en sortie de l'enceinte 7 de traitement comprend essentiellement des particules fluidisées, mais comprend aussi des résidus de dépolissage de l'article traité, tels que des grains de silice issus du dépolissage du verre.

De manière avantageuse, ces résidus sont séparés des particules destinées à être recyclées par l'intermédiaire d'un dispositif 16 de séparation.

Cette séparation peut être effectuée par décantation, ou par séparation magnétique quand les particules ont des caractéristiques ferromagnétiques, en particulier attribuables au noyau, ou encore par filtration.

En particulier, dans le cas où les particules sont fluidisées dans le premier fluide uniquement, on peut prévoir de récupérer et recycler les particules, et de préférence d'effectuer une séparation par filtration ou décantation.

Les particules utilisées dans l'invention sont obtenues en particulier à partir de techniques de type dépôt chimique en phase vapeur (acronyme CVD pour l'anglais "Chemical Vapor Deposition"). Par exemple, les particules utilisées dans l'invention sont obtenues par le procédé tel que décrit dans le brevet FR 2 852 972.

On utilise une poudre submicronique, ce qui permet en particulier la mise en oeuvre du procédé de l'invention sans chauffage. Ainsi, le procédé peut être mis en oeuvre à une température comprise entre 15 et 30°C, et de préférence simplement à la température ambiante.

La taille moyenne des particules est déterminée sur un granulomètre laser en milieu liquide.

De manière préférentielle, les particules ont une taille moyenne égale à plusieurs centaines de nanomètres, et en particulier comprise entre 0,3 et 0,9 micromètres.

Les particules utilisées dans l'invention sont inertes. Elles n'ont pas d'action chimique sur la surface du verre mais possèdent une résistance mécanique leur permettant d'abraser cette surface.

Le choix des particules dépend du résultat souhaité.

La rugosité finale de la surface de l'article traité dépend de la nature des particules, de leur répartition granulométrique et de leur forme.

Les particules utilisées dans l'invention sont en particulier constituées d'un noyau revêtu d'un carbure de silicium ou d'un carbure d'un métal dur choisi par exemple parmi le tungstène ou le bore.

Avantageusement, le noyau des particules est constitué d'un métal, d'un alliage ou d'un oxyde métallique. En particulier, un noyau en un matériau ferromagnétique tel que le fer ou un oxyde de fer permet la mise en oeuvre d'une séparation magnétique après le traitement de l'article.

La taille des particules influence la finesse du toucher final.

La dureté des particules doit être supérieure à celle du matériau constituant l'article traité.

Le recyclage des particules génèrent peu de pertes de ces particules. La perte par recyclage est au plus de 5% du poids total des particules.

En outre, l'usure des particules au cours du traitement de surface est négligeable. Leur réutilisation sur plusieurs cycles n'est donc pas préjudiciable pour la qualité des dépolissages successifs.

Les particules sont fluidisées dans un gaz et un liquide. On peut aussi prévoir l'ajout d'additifs appropriés.

Le gaz est de préférence l'air mais peut aussi être par exemple l'azote ou l'hélium.

Le liquide est de préférence l'eau mais peut aussi être par exemple un polymère.

Les particules sont par exemple présentes en une concentration comprise entre 10% et 60% massique, et de préférence entre 15% et 50% massique, par rapport au liquide de fluidisation.

Chaque article peut présenter une surface interne et une surface externe. Selon un mode particulier de réalisation de l'invention, l'une et/ou l'autre des dites surfaces sont soumises, simultanément ou successivement, à l'opération de traitement de surface.

Le procédé selon l'invention peut permettre le traitement aussi bien des surfaces externes qu'internes d'articles du type flacon ou bouteille par exemple.

Pour le traitement d'une surface interne, on s'arrange pour qu'au moins un moyen de projection accède à cette surface. Par exemple, pour le traitement de la surface interne d'une bouteille présentant un goulot, un moyen de projection est positionné à l'entrée de ce goulot, voire à l'intérieur de ce goulot.

Contrairement à un dépolissage chimique, il est possible de traiter en partie seulement la surface d'un article en y apposant au préalable un cache ou masque, en matière réfractaire par exemple.

Le procédé selon l'invention est utilisé pour le traitement de surface, du verre en particulier, dans le but d'obtenir une surface dépolie.

L'invention peut également être utilisée pour retirer un masque, constitué par exemple d'oxydes réfractaire, apposé sur un article.

Les avantages principaux sont l'absence de risque de pollution par la mise en oeuvre du procédé et l'obtention d'un dépolissage de très bonne qualité, en particulier de qualité supérieure à un dépolissage chimique.

## Revendications

1. Procédé physique de traitement de surface d'articles, comprenant :
o une opération de fluidisation de particules dans un premier fluide et un deuxième fluide par une technique de lit fluidisé, le premier fluide étant un gaz tel que l'air, et le deuxième fluide étant un liquide tel que l'eau ; et
o une opération de traitement d'une surface d'au moins un article par soumission de chacun des dits articles à un flux des dites particules fluidisées,
ledit procédé étant **caractérisé en ce que** les particules présentent une taille moyenne au plus égale à un micromètre, et **en ce que** le flux de particules fluidisées auquel est soumis chaque article présente une vitesse comprise entre 5 et 20 mètres par seconde.

2. Procédé selon la revendication 1, dans lequel l'opération de fluidisation a lieu en présence d'un deuxième fluide qui est un liquide tel que l'eau.

3. Procédé selon la revendication 1 ou 2, dans lequel la température est comprise entre 15 et 30°C, et est de préférence égale à la température ambiante.

4. Procédé selon l'une quelconque des revendications 1 à 3, dans lequel les particules fluidisées sont récupérées pendant l'opération de traitement et/ou pendant une opération de lavage post-traitement, et recyclées au niveau de l'opération de fluidisation.

5. Procédé selon l'une quelconque des revendications 1 à 4, dans lequel les particules sont des particules composites incluant un noyau et un revêtement de carbure de silicium ou de carbure de tungstène ou de nitrure de bore.

6. Procédé selon la revendication 5, dans lequel le noyau comprend un matériau ferromagnétique, et par exemple du fer et/ou au moins un oxyde de fer.

7. Procédé selon l'une quelconque des revendications 1 à 6, dans lequel chaque article est en un matériau choisi parmi le verre, un métal ou un alliage.

8. Procédé selon l'une quelconque des revendications 1 à 7, dans lequel la pression du flux de particules pour l'opération de traitement est comprise entre 2 et 15 bars, et de préférence comprise entre 8 et 12 bars.

9. Procédé selon l'une quelconque des revendications 1 à 8, dans lequel la quantité de particules fluidisées est comprise entre 10% et 60% du poids de deuxième fluide, de préférence entre 15% et 50%.

10. Procédé selon l'une quelconque des revendications 4 à 9, dans lequel les particules récupérées sont soumises à une opération de séparation afin de recycler au niveau de l'opération de fluidisation les particules exemptes d'éventuels résidus de l'article traité.

11. Procédé selon l'une quelconque des revendications 1 à 10, dans lequel les particules sont fluidisées, dans le premier fluide et éventuellement dans le deuxième fluide, au niveau d'une chambre (1) de fluidisation sous pression, et dans lequel les particules fluidisées passent de la chambre (1) de fluidisation à un dispositif (4) de projection incluant au moins un moyen (5) de projection tel qu'une buse, chacun des dits moyens (5) de projection se trouvant dans une enceinte (7) de traitement incluant un dispositif de convoyage de chaque article (6), comportant éventuellement au moins un moyen (8, 9) de rotation de chacun des dits articles (6).

12. Procédé selon la revendication 11, dans laquelle chaque moyen (5) de projection présente une section transversale de surface comprise entre 5 et 20 millimètres carré, de préférence entre 8 et 15 millimètres carré.

## Claims

1. Physical method for treating the surface of items, comprising:
° an operation of fluidizing particles in a first fluid and a second fluid using a fluidized bed technique, the first fluid being a gas such as air, and the second fluid being a liquid such as water; and
° an operation of treating a surface of at least one item by subjecting each of said items to a stream of said fluidized particles,
said method being **characterized in that** the particles have a mean size of one micrometre at most, and **in that** the stream of fluidized particles to which each item is subjected is moving at a velocity of between 5 and 20 metres per second.

2. Method according to Claim 1, in which the fluidizing operation takes place in the presence of a second fluid which is a liquid such as water.

3. Method according to Claim 1 or 2, in which the temperature is comprised between 15 and 30°C and is preferably equal to ambient temperature.

4. Method according to any one of Claims 1 to 3, in which the fluidized particles are recovered during the treatment operation and/or during a post-treatment washing operation and are recycled to the fluidizing operation.

5. Method according to any one of Claims 1 to 4, in which the particles are composite particles including a core and a surface coating of silicon carbide or tungsten carbide or boron nitride.

6. Method according to Claim 5, in which the core contains a ferromagnetic material and, for example, iron and/or at least one iron oxide.

7. Method according to any one of Claims 1 to 6, in which each item is made of a material chosen from glass, a metal or an alloy.

8. Method according to any one of Claims 1 to 7, in which the pressure of the stream of particles for the treatment operation is comprised between 2 and 15 bar and preferably comprised between 8 and 12 bar.

9. Method according to any one of Claims 1 to 8, in which the quantity of fluidized particles is comprised between 10% and 60% of the weight of second fluid, preferably between 15% and 50%.

10. Method according to any one of Claims 4 to 9, in which the recovered particles are subjected to a separation operation in order to recycle into the fluidizing operation those particles that are free of any possible residue of treated item.

11. Method according to any one of Claims 1 to 10, in which the particles are fluidized in the first fluid, and possibly in the second fluid, at a pressurized fluidizing chamber (1), and in which the fluidized particles pass from the fluidizing chamber (1) to a spray device (4) that includes at least one spray means (5) such as a nozzle, each of said spray means (5) being situated inside a treatment containment (7) including a device for conveying each item (6), possibly including at least one means (8, 9) for rotating each of said items (6).

12. Method according to Claim 11, in which each spray means (5) has a cross-sectional area comprised between 5 and 20 square millimetres, preferably between 8 and 15 square millimetres.

## Patentansprüche

1. Physikalisches Verfahren zur Oberflächenbehandlung von Artikeln, mit:
• einem Arbeitsgang der Fluidisierung von Partikeln in einem ersten Fluid und einem zweiten Fluid durch eine Fließbetttechnik, wobei das erste Fluid ein Gas ist, wie Luft, und das zweite Fluid eine Flüssigkeit ist, wie Wasser; und
• einem Arbeitsgang der Behandlung einer Oberfläche wenigstens eines Artikels durch Aussetzung jedes dieser Artikel einem Fluss dieser fluidisierten Partikel,
• wobei das Verfahren **dadurch gekennzeichnet ist, dass** die Partikel eine mittlere Größe von höchstens gleich einem Mikrometer haben und dass der Fluss der fluidisierten Partikel, dem jeder Artikel ausgesetzt wird, eine Geschwindigkeit von zwischen fünf und zwanzig Meter pro Sekunde aufweist.

2. Verfahren nach Anspruch 1, in welchem der Arbeitsgang der Fluidisierung in Anwesenheit eines zweiten Fluids erfolgt, dass eine Flüssigkeit wie Wasser ist.

3. Verfahren nach Anspruch 1 oder 2, in welchem die Temperatur zwischen 15° und 30° Celsius liegt und vorzugsweise gleich der Umgebungstemperatur ist.

4. Verfahren nach einem der Ansprüche 1 bis 3, in welchem die fluidisierten Partikel während des Arbeitsgangs der Behandlung und/oder während eines Arbeitsgangs der Wasch- Nachbehandlung zurückgewonnen wird und an den Arbeitsgang der Fluidisierung zurückgeführt wird.

5. Verfahren nach einem der Ansprüche 1 bis 4, in welchem die Partikel Kompositartikel sind, welche einen Kern und eine Beschichtung aus Siliziumkarbid oder Wolframkarbid oder Bohrnitrid umfasst.

6. Verfahren nach Anspruch 5, in welchem der Kern ein ferromagnetisches Material umfasst und zum Beispiel Eisen und oder wenigstens ein Eisenoxid ist.

7. Verfahren nach einem der Ansprüche 1 bis 6, in welchem jeder Artikel aus einem Material ausgewählt aus Glas, einem Metall oder einer Legierung besteht.

8. Verfahren nach einem der Ansprüche 1 bis 7, in welchem der Druck des Partikelflusses für den Arbeitsgang der Behandlung zwischen 2 und 15 bar liegt und vorzugsweise zwischen 8 und 12 bar.

9. Verfahren nach einem der Ansprüche 1 bis 8, in welchem die Menge der fluidisierten Partikel zwischen 10 Gew.% und 60 Gew.% des zweiten Fluids, vorzugsweise zwischen 15% und 50%, liegt.

10. Verfahren nach einem der Ansprüche 4 bis 9, in welchem die zurückgewonnenen Partikel einem Arbeitsgang der Separation ausgesetzt werden, um zum Arbeitsgang der Fluidisierung die Partikel ohne eventuelle Reststoffe der behandelten Artikel zurückzuführen.

11. Verfahren nach einem der Ansprüche 1 bis 10, in welchem die Partikel in dem ersten Fluid und gegebenenfalls in dem zweite Fluid fluidisiert werden in einer unter Druck arbeitenden Fluidisierungskammer (1), und in welchem die fluidisierten Partikel die Fluidisierungskammer (1) in Richtung einer Projektionseinrichtung (4) passieren, welche wenigstens ein Projektionsmittel (5) umfasst, wie eine Düse, wobei sich jedes Projektionsmittel (5) in einer Einfassung (7) zur Behandlung befindet, welche eine Transporteinrichtung für jeden Artikel (6) umfasst, mit gegebenenfalls wenigstens einem Mittel (8, 9) zur Rotation jedes des Artikels (6).

12. Verfahren nach Anspruch 11, in welchem jedes Projektionsmittel (5) aufweist einen Oberflächenquerschnitt zwischen 5 und 20 mm² und vorzugsweise zwischen 8 und 15 mm².
